# FASCICULE DE BREVET EUROPEEN

(11) **EP 0 376 854 B1**
(45) Date de publication et mention de la délivrance du brevet: **13.10.1993**
(21) Numéro de dépôt: 89403679.7
(22) Date de dépôt: 28.12.1989
(51) Int. Cl.: B01D 39/14, B01D 29/11

(54) **Procédé et dispositif de fabrication d'une cartouche filtrante**
Verfahren und Anlage für die Herstellung eines Patronenfilters
Process and device for the manufacture of a cartridge filter

(30) Priorité: 30.12.1988 FR 8817600
(43) Date de publication de la demande: 04.07.1990
(73) Titulaire: INSTITUT FRANCAIS DU PETROLE, 92502 Rueil-Malmaison (FR)
(72) Inventeur: Gadelle, Claude, F-92500 Rueil Malmaison (FR)

(56) Documents cités:
- FR-A- 927 578
- FR-A- 1 253 285
- FR-A- 2 140 537
- US-A- 3 630 384

## Description

La présente invention concerne un procédé de fabrication d'une cartouche filtrante utilisable notamment lors de la mise en production de réservoirs géologiques contenant du pétrole ou du gaz, pour éliminer des venues de sable dans le puits traversant des formations sableuses peu ou pas consolidées. La présente invention concerne également les cartouches obtenues par ce procédé et un dispositif pour la fabrication de cartouches filtrantes.

Il est connu, pour mettre en production des réservoirs, d'utiliser un moyen mécanique, tels que des écrans artificiels à orifices calibrés, notamment des crépines, ou des empilages de graviers ayant une répartition granulométrique bien définie, selon la dimension des grains de sable de la formation géologique traversée par le puits. Une telle méthode, de mise en oeuvre délicate, est souvent utilisée pour équiper des puits neufs.

Le document FR-A-1253285 décrit un procédé de fabrication d'éléments filtrants composés de fibres et d'un liant à base de mélamine polymérisée. Les fibres sont déposés sur un moule poreux, puis imprégnées d'une solution de liant. Le liant est ensuite séché et polymérisé par insufflation d'air chaud à travers L'élément filtrant et le moule.

Le document FR-A-927578 décrit la fabrication de cartouches filtrantes cylindriques à base de fibres et d'un liant résineux. Une suspension de fibres et d'agent liant est introduite dans un moule ayant deux parois poreuses concentriques. Cette masse est ensuite chauffée afin de polymériser le liant.

Les cartouches filtrantes produites par le procédé selon l'invention, sont beaucoup plus faciles et moins onéreuses à utiliser que les écrans artificiels ou les empilages de graviers, notamment du fait de la moindre fragilité de ces cartouches et de l'infrastructure réduite pour leur mise en place.

Un objet de la présente invention est de proposer un procédé de fabrication de cartouches filtrantes de mise en oeuvre très facile et fiable qui fournit un produit d'une qualité mécanique élevée et stable dans le temps, d'une grande perméabilité, d'une excellente inertie chimique et d'une grande stabilité thermique, répondant notamment aux exigences de production ou de traitement des puits de pétrole ou de gaz donnant lieu à des venues de sable.

Ce résultat est atteint, selon l'invention, avec un procédé de fabrication de cartouche filtrante par polymérisation d'un hydrocarbure polyéthylénique obtenu par polymérisation de diènes ou de triènes avec des éléments granulaires.

Ce procédé comporte la préparation d'un mélange comportant ledit hydrocarbure et lesdits éléments granulaires, puis l'introduction du mélange dans un moule, ce moule étant formé par une première paroi poreuse et une deuxième paroi poreuse, ces parois étant reliées par une enveloppe, l'introduction du moule dans un four de manière à élever la température du mélange et transformer par une réaction de polymérisation thermique l'hydrocarbure en une matière liant les éléments granulaires du mélange, l'ensemble de la matière et des éléments granulaires formant la cartouche filtrante, et l'injection d'une composition gazeuse chimiquement inerte dans le moule par l'une desdites parois et à travers ledit mélange chauffé assurant une perméabilité suffisante de la cartouche filtrante.

On entend par composition gazeuse chimiquement inerte, une composition gazeuse qui, dans les conditions opératoires du procédé, ne réagit pas avec l'hydrocarbure polyéthylénique. Le gaz injecté pourra toutefois éventuellement contenir de l'oxygène à l'état de traces. La composition injectée pourra être un gaz naturel, de la vapeur d'eau humide, de l'azote, un gaz brûlé ou encore un mélange de gaz, tel notamment un mélange de gaz brûlé avec de la vapeur d'eau, ou toute autre combinaison de vapeur d'eau et de gaz inerte.

L'injection de la composition gazeuse permet d'obtenir une perméabilité aux fluides du bloc comportant la matière polymérisée et les éléments granulaires, ces fluides pouvant être de l'eau, du pétrole ou du gaz naturel, de l'azote.

La température du four et le temps de conservation du mélange de matière polymérisable et des éléments granulaires est adapté pour que le degré d'avancement de la polymérisation de la matière soit suffisant.

Selon une variante de mise en oeuvre du procédé, on produit une cartouche filtrante notamment de forme cylindrique ayant un noyau central creux, en utilisant une première paroi poreuse intérieure coaxiale ou concentrique à une deuxième paroi poreuse externe et une enveloppe comportant un fond et un couvercle coopérant avec lesdites parois poreuses pour former un moule cylindrique creux ou annulaire, en injectant la composition gazeuse par l'une des parois poreuses et en extrayant la composition gazeuse par l'autre des parois poreuses.

De préférence, l'injection s'effectue au travers du couvercle, puis au travers de la première paroi poreuse intérieure à la deuxième paroi poreuse qui lui est extérieure.

On ne sortira pas du cadre de la présente invention en injectant la composition gazeuse d'abord à travers la deuxième paroi poreuse extérieure, des éléments granulaires imprégnés de matière polymérisable, puis à travers la première paroi poreuse interne.

L'hydrocarbure polyéthylénique pourra avantageusement être obtenu par polymérisation de diènes ou de triènes. Cet hydrocarbure pourra éventuellement être dilué par un solvant organique. Cet hydrocarbure polyéthylénique pourra être avantageusement du polybutaniène.

Les solvants utilisés seront constitués, par exemple, par des hydrocarbures, tels que benzène, toluène, xylène, ou par une coupe pétrolière ; la teneur en solvant sera avantageusement comprise entre 0 et 50 % pour conserver une qualité mécanique suffisante.

Le catalyseur, additionné éventuellement à l'hydrocarbure polyéthylénique, pourra être au moins un élément du groupe constitué par le baryum, le zirconium, le cérium, le lanthane et les lanthanides, le vanadium, le manganèse, le fer, le cobalt, le zinc, le nickel, le plomb et le cuivre. Les éléments d'un tel catalyseur seront utilisés sous forme de sels, tels que carboxylates, naphténates, sulfonates, octoates..., mélangeables avec l'hydrocarbure. La teneur de la solution en chacun des métaux utilisés dans le catalyseur sera inférieure à 3 % poids et de préférence comprise entre 0,007 et 2 % poids. La composition exacte du catalyseur (métaux utilisés et teneurs en métaux) dépendra de la nature des éléments granulaires et des conditions opératoires de fabrication (pression, température...).

Le catalyseur pourra également renfermer un composé organique, tel qu'un peroxyde ou tout autre composé permettant la formation de radicaux libres. A ces composés peroxydiques, on pourra éventuellement ajouter des catalyseurs choisis dans le groupe précédemment défini, constitué par le baryum, le zirconium, le cérium, le lanthane et les lanthanides, le vanadium, le manganèse, le fer, le cobalt, le zinc, le nickel, le plomb, le cuivre. Parmi les composés peroxydiques, on pourra citer, à titre d'exemple, l'hydroperoxyde de t-butyle, le peroxyde de di-t-butyle, l'hydroperoxyde de cumène...

La température du mélange placé dans le four et le temps de séjour dans le four, doivent être suffisants pour que l'hydrocarbure se polymérise efficacement et assure la cohésion des éléments granulaires. Cette température pourra être comprise entre 200 et 320°C et avantageusement entre 250 et 300°C.

La composition gazeuse injectée pourra être froide ou chaude et son débit sera sensiblement compris entre 100 et 1000 l/min.m² de surface de section du mélange d'éléments granulaires et de l'hydrocarbure au travers duquel est injectée la composition.

Les éléments granulaires pourront comporter au moins un des matériaux suivants, du sable, des particules, telles des billes ou des microbilles, de verre, de silice, d'alumine, de carbure, comme le carbure de silicium.

La qualité mécanique des surfaces de la cartouche pourra être adaptée aux exigences de fabrication, notamment la pression d'injection, ainsi qu'aux exigences d'utilisation, telles que les efforts ou les chocs produits lors de la mise en place des cartouches. A cet effet, l'une au moins des parois poreuses servant à la fabrication de la cartouche pourra faire partie intégrante de la cartouche.

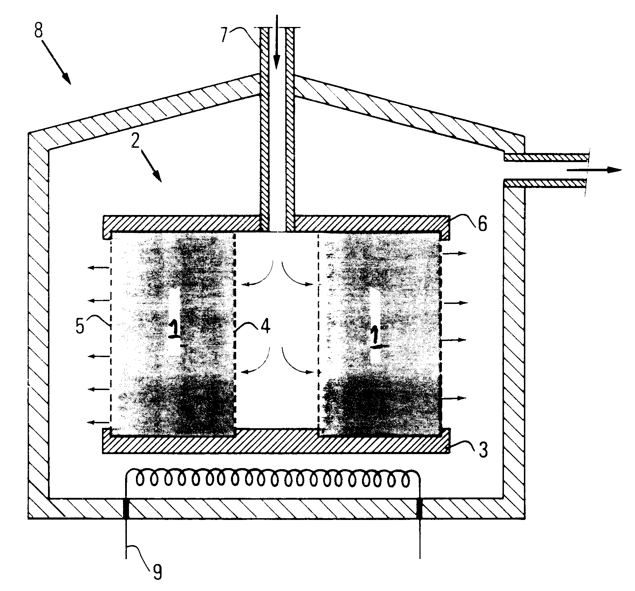

L'invention sera bien comprise et ses avantages apparaîtront clairement à la lecture de la description suivante, illustrée par la figure 1 annexée représentant la fabrication d'une cartouche filtrante cylindrique creuse 1 obtenue par polymération d'un hydrocarbure polyéthylénique mélangé avec des éléments granulaires.

Le mélange d'hydrocarbure éventuellement additionné de catalyseur et des éléments granulaires est introduit à l'intérieur du moule 2 comportant un fond circulaire 3 sur lequel on positionne une première paroi poreuse interne 4 et une deuxième paroi poreuse externe 5 que l'on recouvre d'un couvercle circulaire 6 une fois le moule rempli.

Les parois poreuses sont obtenues par perforation de tubes à un calibre adapté à la taille des éléments granulaires.

La partie centrale du couvercle 6 est percée et reliée par un conduit 7 à un générateur débitant une composition gazeuse traversant le moule 2 de l'intérieur vers l'extérieur, en passant successivement à travers la première paroi et la deuxième paroi. Les flèches représentées sur la figure 1 indiquent la circulation du gaz inerte dans le moule 2 et dans le four 8 dans lequel est placé le moule, ce four comportant des moyens de chauffage ayant la référence 9.

L'efficacité du procédé selon l'invention est illustrée par les essais suivants, les caractéristiques de la mise en oeuvre de ces essais n'ayant aucun caractère limitatif.

### Essai n° 1 :

Un mélange de sable de carrière ayant une granulométrie comprise entre 150 et 300 micromètres et de polybutaniène est tassé à la température ambiante dans un moule du type de celui représenté à la figure 1 et ayant une paroi poreuse interne d'un diamètre de 7,6 cm, une paroi poreuse externe d'un diamètre de 17,8 cm et dont la hauteur des parois est de 50 cm.

La température du four étant consignée à 300°C, on injecte sous une pression de 100kPa un mélange gazeux contenant 15 % d'azote et 85 % de vapeur d'eau pendant 8 heures avec un débit de 25 litres par minute.

La résistance à la compression du milieu effectuée sur un prélèvement de la cartouche filtrante obtenue après essai est de 6MPa.

### Essai n° 2 :

Cet essai est préparé comme l'essai n° 1 avec un mélange de sable de carrière et d'une composition contenant 72 % en poids de polybutadiènes, 5 % en poids d'octoate de cobalt et 3 % en poids d'octoate de zirconium et de 20 % en poids d'essence.

Le moule étant placé à 250°C, on injecte une composition de gaz brûlé contenant 25 % en volume d'azote et 15 % en volume de dioxyde de carbone, pendant 10 heures, sous une pression de 100kPa, avec un débit de 25 litres par minute.

Après l'essai, on constate que la résistance à la compression est de 5,5 MPa.

### Essai n° 3 :

On opère comme dans l'essai n° 2 en injectant une composition gazeuse comportant 1/15 en volume de dioxyde de carbone, 2/15 de vapeur d'eau et 12/15 d'azote, sous une pression de 1 bar pendant 10 heures, le four étant consigné à 250°C.

Dans ces conditions, on constate que la résistance à la compression d'un échantillon prélevé dans la cartouche obtenue est de 5 MPa.

### Essai n° 4 :

On opère comme dans l'essai n° 1, mais on utilise une composition à base de polybutadiène dilué, par 20 % en poids d'essence et additionné de 0,3 % en poids de cerium. On injecte de l'azote pendant 20 heures sous une pression de 100 kPa avec un débit de 30 litres/minute, le four étant consigné à 240°C.

Dans ces conditions, on constate que la résistance à la compression d'un échantillon prélevé dans la cartouche obtenue est de 10 MPa.

### Essai n° 5 :

On opère comme dans l'exemple n° 1, mais on utilise une composition contenant 78 % en poids de polybutadiène, 20 % en poids d'essence et 2 % en poids de peroxyde de di-t-butyle que l'on mélange au sable de carrière.

On injecte de l'azote sous une pression de 100 kPa, à un débit de 30 litres/minute, pendant 60 heures, la température du four étant consignée à 200°C.

Dans ces conditions, on constate que la résistance à la compression d'un échantillon prélevé dans la cartouche obtenue est de 2,5 MPa.

## Revendications

1. Procédé de fabrication d'une cartouche filtrante par polymérisation d'un hydrocarbure polyéthylénique, obtenu par polymérisation de diènes ou de triènes, avec des éléments granulaires, ladite cartouche étant utilisable lors de la mise en production de réservoirs géologiques contenant du pétrole ou du gaz, ce procédé comportant la préparation d'un mélange comportant ledit hydrocarbure et lesdits éléments granulaires, puis l'introduction du mélange dans un moule, ce moule (2) étant formé par une première paroi poreuse (4) et une deuxième paroi poreuse (5), ces parois étant reliées à une enveloppe, et qui comprend en outre l'introduction dudit moule dans un four (8) de manière à élever la température du mélange et transformer par une réaction de polymérisation thermique ledit hydrocarbure en une matière liant lesdits éléments granulaires du mélange, l'ensemble de la matière et desdits éléments granulaires formant alors ladite cartouche filtrante, et l'injection d'une composition gazeuse chimiquement inerte dans ledit moule par l'une desdites parois et à travers ledit mélange chauffé, ladite injection assurant une perméabilité suffisante de ladite cartouche.

2. Procédé selon la revendication 1, caractérisé en ce que ladite première paroi poreuse est coaxiale ou concentrique à ladite deuxième paroi poreuse, en ce que ladite enveloppe comporte un fond et un couvercle coopérant avec lesdites parois poreuses pour former un moule de forme annulaire et en ce que l'on injecte la composition gazeuse par ladite deuxième paroi poreuse.

3. Procédé selon l'une des revendications 1 à 2, caractérisé en ce que lesdits éléments granulaires comportent un des matériaux suivants: du sable, des particules, telles des billes ou des microbilles, de verre, de silice, d'alumine, de carbure, comme le carbure de silicium.

4. Procédé selon l'une des revendications 1 à 3, caractérisé en ce que ledit hydrocarbure polyéthylénique est un polybutadiène.

5. Procédé selon l'une des revendications 1 à 4, caractérisé en ce que ledit hydrocarbure polyéthylénique est additonné d'un catalyseur renfermant au moins un élément du groupe constitué par le baryum, le zirconium, le cérium, le lanthane et les lanthanides, le vanadium, le manganèse, le fer, le cobalt, le zinc, le nickel, le plomb et le cuivre.

6. Procédé selon l'une des revendications 1 à 5, caractérisé en ce que ladite composition gazeuse comporte un gaz choisi parmi un gaz naturel, de la vapeur d'eau humide, de l'azote, un mélange de vapeur d'eau et de gaz brûlé.

7. Procédé selon l'une des revendications 1 à 6, caractérisé en ce que la température du mélange placé dans le four est comprise entre 200 et 320°C et de préférence entre 250 et 300°C.

8. Cartouche filtrante obtenue par la mise en oeuvre du procédé selon l'une des revendications 1 à 7, caractérisée en ce qu'elle a une forme cylindrique et que l'une au moins desdites parois poreuses (4,5) fait partie intégrante de la cartouche.

9. Dispositif pour la fabrication d'une cartouche filtrante, caractérisé en ce qu'il comporte un four (8) dans lequel on place un moule (2) ayant une première paroi interne poreuse (4), une deuxième paroi externe poreuse (5), un fond (3) et un couvercle (6) définissant un volume annulaire, ledit fond ou ledit couvercle comportant une ouverture communiquant avec un générateur fournissant une composition gazeuse chimiquement inerte et adapté à produire un courant de ladite composition gazeuse de ladite paroi interne vers ladite paroi externe à travers ledit moule.

## Claims

1. A method of manufacturing a filter cartridge by polymerising a polyethylene hydrocarbon, obtained by the polymerisation of dienes and trienes, with granular elements, this cartridge being suitable for applications during production in geological reservoirs containing petroleum or gas, wherein the method of the invention involves preparing a mixture containing the hydrocarbon and the granular elements, introducing the mixture into a mould, the mould (2) being formed by a first porous wall (4) and a second porous wall (5), these walls being connected to a jacket, followed by the mould's being placed in an oven (8) in order to raise the temperature of the mixture and transform the hydrocarbon by means of a thermal polymerisation reaction in such a way that the granular elements in the mixture bind, the material and the granular elements forming together the filter cartridge, and then by the injection of a chemically inert gaseous composition into the mould through one of the walls and across the heated mixture, the injection being such as to ensure sufficient permeability of the mould.

2. A method in accordance with claim 1, characterised in that the first porous wall is coaxial or concentric to the second porous wall, in that the jacket comprises a base and a lid co-operating with the porous walls to form an annular-shaped mould and in that the composition gas is injected through the second porous wall.

3. A method in accordance with one of claims 1 to 2, characterised in that the granular elements include one of the following materials: sand, particles such as bearings or micro-bearings, glass, silica, alumina, carbide, for example silicon carbide.

4. A method in accordance with one of claims 1 to 3, characterised in that the polyethylene hydrocarbon is a polybuta-diene.

5. A method in accordance with one of claims 1 to 4, characterised in that a catalyst containing at least one element of the group formed by barium, zirconium, cerium, lanthanum and the lanthanides, vanadium, manganese, iron, cobalt, zinc, nickel, lead and copper is added to the polyethylene hydrocarbon.

6. A method in accordance with one of claims 1 to 5, characterised in that the gaseous composition includes a gas chosen from a natural gas, humid water vapour, nitrogen, a mixture of water vapour and burned gas.

7. A method in accordance with one of claims 1 to 6, characterised in that the temperature of the mixture placed in the oven ranges between 200 and 320°C and preferably between 250 and 300°C.

8. A filter cartridge obtained by implementing a method in accordance with one of claims 1 to 7, characterised in that it is cylindrical in shape and in that at least one of the porous walls (4, 5) forms an integral part of the cartridge.

9. A device for manufacturing a filter cartridge, characterised in that it comprises an oven (8) in which is placed a mould (2) with a first internal porous wall (4), a second external porous wall (5), a base (3) and a lid (6) delineating an annular volume, the base and lid having an opening that communicates with a generator supplying a chemically inert gaseous composition and programmed to produce a stream of the gaseous composition from the internal wall towards the external wall through the mould.

## Patentansprüche

1. Verfahren zur Herstellung einer Filterkartusche durch Polymerisation eines polyethylenischen Kohlenwasserstoffs, der durch Polymerisation von Dienen oder Trienen erhalten wurde, mit granulatförmigen Elementen, wobei die Kartusche bei der Inproduktionsnahme von geologischen erdöl- oder gasenthaltenden Speichern anwendbar ist, wobei das verfahren umfasst: die Herstellung eines Gemisches, welches diesen Kohlenwasserstoff und diese granulatförmigen Elemente umfasst, anschliessendes Einführen des Gemisches in eine Form, wobei die Form (2) durch eine erste poröse Wand (4) und eine zweite poröse Wand (5) gebildet ist, wobei diese Wände mit einer Umhüllung verbunden sind und des weiteren umfasst: das Einführen dieses Gemisches in einen Ofen (8) derart, daß die Temperatur des Gemisches erhöht wird und durch eine thermische Polymerisationsreaktion dieser Kohlenwasserstoffe in ein Material umgeformt wird, welches diese granulatförmigen Elemente des Gemisches verbindet, wobei die Gesamtheit des Materials und der granulatförmigen Elemente dann diese Filterkartusche bilden, und
das Einführen einer chemisch inerten gasförmigen Zusammensetzung in diese Form über eine dieser Wandungen und durch dieses erhitzte Gemisch, wobei die Injektion für eine ausreichende Permeabilität dieser Kartusche sorgt.

2. Verfahren nach Anspruch 1, dadurch gekennzeichnet, daß diese erste poröse Wand koaxial oder konzentrisch zu dieser zweiten porösen Wand ist, daß diese Umhüllung einen Boden und einen Deckel umfasst, die mit diesen porösen Wandungen zusammenwirken, um eine Form ringförmiger Gestalt zu bilden und daß man diese gasförmige Zusammensetzung über diese zweite poröse Wandung injiziert.

3. Verfahren nach einem der Ansprüche 1 bis 2, dadurch gekennzeichnet, daß diese granulatförmigen Elemente eines der folgenden Materialien umfassen: Sand, Partikel wie Kugeln oder Mikrokugeln, Glas, Siliziumdioxyd, Aluminiumdioxyd, Karbid wie Siliziumkarbid.

4. Verfahren nach einem der Ansprüche 1 bis 3, dadurch gekennzeichnet, daß dieser polyethylenische Kohlenwasserstoff ein Polybutadien ist.

5. Verfahren nach einem der Ansprüche 1 bis 4, dadurch gekennzeichnet, daß diesem polyethylenischen Kohlenwasserstoff ein Katalysator zugesetzt wird, der wenigstens ein Element der Gruppe umfasst, die gebildet wird durch Barium, Zirkonium, Cer, Landthan, die Lanthaniden, Vanadium, Mangan, Eisen, Kobalt, Zink, Nickel, Blei und Kupfer.

6. Verfahren nach einem der Ansprüche 1 bis 5, dadurch gekennzeichnet, daß die gasförmige Zusammensetzung ein Gas umfasst, das gewählt ist aus einem natürlichen Gas, dampffeuchten Wassers, Stickstoff und einem Gemisch aus Wasserdampf und Verbrennungsgas.

7. Verfahren nach einem der Ansprüche 1 bis 6, dadurch gekennzeichnet, daß die Temperatur des in den Ofen eingesetzten Gemisches zwischen 200° und 320° C und vorzugsweise zwischen 250° und 300° C beträgt.

8. Filterkartusche, hergestellt durch Verwirklichung des Verfahrens eines der Ansprüche 1 bis 7, dadurch gekennzeichnet, daß sie eine zylindrische Gestalt hat und daß wenigstens eine dieser porösen Wandungen (4, 5) einen integrierenden Bestandteil der Kartusche bildet.

9. Vorrichtung zur Herstellung einer Filterkartusche, dadurch gekennzeichnet, daß sie einen Ofen (8) umfasst, in den man eine Form einsetzt, die eine erste poröse Innenwand (4), eine zweite poröse äussere Wand (5), einen Boden (3) und einen Deckel (6) hat, die ein Innenvolumen definieren, wobei dieser Boden oder dieser Deckel eine Öffnung umfassen, die mit einem Generator in Verbindung steht, der eine gasförmige chemisch inerte Zusammensetzung liefert und so ausgebildet ist, daß er einen Strom dieser gasförmigen Zusammensetzung der Innenwandung gegen diese Aussenwandung durch diese Form hindurch erzeugt.
